# FASCICULE DE BREVET EUROPEEN

(11) **EP 0 462 891 B1**
(45) Date de publication et mention de la délivrance du brevet: **03.04.1996**
(21) Numéro de dépôt: 91401642.3
(22) Date de dépôt: 18.06.1991
(51) Int. Cl.: H01H 3/50, H01H 13/60, H01H 25/04

(54) **Commutateur électrique perfectionné notamment pour la commande de feux de véhicules automobiles**
Elektrischer Schalter, insbesondere zum Ansteuern von Leuchten in Kraftfahrzeugen
Electrical switch, particularly for controlling motor vehicle lamps

(30) Priorité: 19.06.1990 FR 9007651
(43) Date de publication de la demande: 27.12.1991
(73) Titulaire: JAEGER, F-92303 Levallois-Perret (FR)
(72) Inventeur: Gauthier, Christian, F-92200 Neuilly sur Seine (FR)
(74) Mandataire: Martin, Jean-Jacques

(56) Documents cités:
- DE-A- 2 003 628
- DE-A- 2 316 779
- DE-A- 2 512 225
- DE-A- 3 626 241
- DE-C- 3 803 125
- FR-A- 2 395 587

## Description

La présente invention concerne le domaine des commutateurs électriques.

Elle s'applique tout particulièrement, mais non exclusivement aux véhicules automobiles, notamment à la commande de feux de véhicules automobiles.

La présente invention concerne plus précisément un commutateur électrique du type connu en soi comprenant un élément de commande guidé à pivotement et indexé dans son pivotement par un plot d'indexation sollicité en appui contre une surface d'indexation, par un ressort, un actionneur mobile et adapté pour opérer un effet de commutation électrique lors de son déplacement, et des moyens d'entraînement aptes à provoquer un déplacement de l'actionneur, lors du pivotement de l'élément de commande, afin d'assurer un effet de commutation électrique.

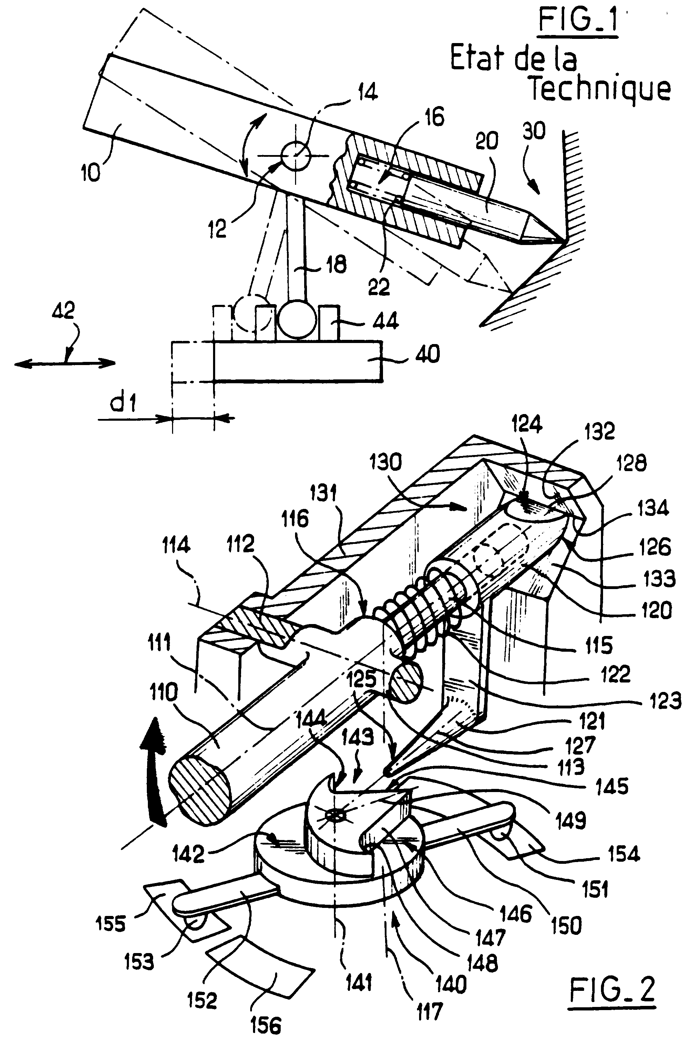

De nombreux commutateurs électriques répondant à la définition ci-dessus ont déjà été proposés. On a schématisé sur la figure 1 annexé la structure de ces commutateurs électriques connus.

On retrouve sur la figure 1 annexée un élément de commande 10 guidé à pivotement grâce à des tourillons 12 autour d'un axe 14. L'axe 14 est perpendiculaire au plan de la figure 1. La structure support des tourillons 12 n'est pas représentée sur la figure 1 pour simplifier l'illustration. Cette structure support est de préférence formée sur le boîtier de commutateur.

L'élément de commande 10 est indexé dans son pivotement autour de l'axe 14.

Selon la représentation donnée sur la figure 1 annexée les moyens d'indexation comprennent un plot 20 sollicité en appui contre une surface crantée fixe 30. La surface crantée 30 peut être prévue par exemple sur un boîtier supportant les tourillons 12. Le plot 20 est placé dans un alésage borgne 16 ménagé dans l'élément de commande 10. Un ressort 22 est intercalé entre le fond de l'alésage 16 et le plot 20, pour pousser celui-ci contre la surface crantée 30.

Selon les dispositifs antérieurs connus l'actionneur précité est formé d'un tiroir de commutation 40 associé à l'élément de commande 10. Le tiroir 40 est guidé à translation dans la direction référencée 42, qui est parallèle au plan de la figure 1.

Le tiroir 40 est conçu pour opérer un effet de commutation électrique lors de son déplacement. Pour cela le tiroir 40 peut par exemple être muni de plots électriquement conducteurs déplacés sur un jeu de lamelles associées.

Selon les dispositifs connus représentés sur la figure 1 les moyens d'entraînement du tiroir 40, sont formés d'un doigt 18 solidaire de l'élément de commande 10 et excentré par rapport à l'axe 14 ; le doigt 18 étant engagé dans une fourche 44 solidaire du tiroir 40.

L'homme de l'art comprendra aisément que la disposition précédemment décrite permet de déplacer le tiroir 40 à translation dans la direction 42 lors du pivotement de l'élément 10 autour de l'axe 14.

On a ainsi représenté en traits continus sur la figure 1, l'élément de commande 10, le plot d'indexation 20 et le tiroir 40 dans une position de repos ; tandis que sur la même figure 1, on a représenté en traits mixtes interrompus une position stable occupée par l'élément de commande 10, le plot d'indexation et le tiroir 40 après pivotement de l'élément de commande 10.

Le document DE-A-3803125 décrit un commutateur électrique du type défini dans le préambule de la revendication 1 annexée, dans lequel l'actionneur est solidaire d'un plot d'indexation.

Les documents FR-A-2395587 et DE-A-2512225 décrivent des commutateurs électriques comprenant un élément de commutation électrique sous forme d'un élément basculant.

La présente invention a maintenant pour but de perfectionner les dispositifs de commutation connus du type représenté sur la figure 1 et précédemment décrit.

Ce but est atteint selon la présente invention grâce à un commutateur électrique du type connu indiqué précédemment caractérisé par le fait que :
- l'actionneur est formé d'un élément basculant entre deux positions, qui comprend deux paires de surfaces d'entraînement en forme de dièdres concaves, et
- les moyens d'entraînement comprennent un doigt solidaire du plot d'indexation de l'élément de commande et qui s'étend parallèlement à l'axe longitudinal du plot d'indexation, de telle sorte que lors du pivotement de l'élément de commande le doigt d'entraînement vienne successivement en appui contre les paires de surfaces d'entraînement prévues sur l'élément basculant pour déplacer alternativement celui-ci entre ses deux positions.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 précédemment décrite représente schématiquement un dispositif de commutation connu conforme à l'état de la technique, et
- la figure 2 représente une vue schématique en perspective partielle d'un dispositif de commutation conforme à la présente invention.

On a représenté schématiquement sur la figure 2 annexée un dispositif de commutation conforme à la présente invention qui comprend pour l'essentiel : un élément de commande 110, un plot d'indexation 120, une surface d'indexation 130 et un actionneur 140.

L'élément de commande 110 est formé d'un levier centré sur son axe longitudinal 111. L'élément de commande 110 est guidé à pivotement grâce à des tourillons 112, 113 autour d'un axe 114. On a représenté schématiquement et partiellement sur la figure 2 une structure 131 définissant des paliers support pour les tourillons 112, 113. La structure 131 peut être formée du boîtier de commutateur ou d'un moyen auxiliaire logé dans celui-ci. L'élément de commande 110 est indexé dans son pivotement autour de l'axe 114. Les moyens d'indexation sont formés par le plot 120 précité associés à la surface d'indexation 130.

De préférence, la surface d'indexation 130 est formée sur l'élément de boîtier 131 précité.

La surface d'indexation 130 peut faire l'objet de nombreux modes de réalisation. Elle peut être similaire aux dispositions connues représentées sur la figure 1 et comprenant par exemple un dièdre central définissant la position de repos de l'élément de commande, de part et d'autre duquel sont placés des dièdres concaves auxiliaires définissant des positions actives stables de l'élément de commande obtenues par pivotement de celui-ci autour de l'axe 114.

Selon le mode de réalisation schématique donné sur la figure 2, la surface d'indexation 130 est cependant définie par un seul dièdre concave en direction du plot 120 délimité par deux surfaces 132, 133. Le plot 120 est sollicité vers le fond 134 coïncidant avec la zone de jonction entre les surfaces 132, 133 par un ressort 122.

Selon le mode de réalisation représenté le plot 120 est muni d'un alésage borgne longitudinal dans lequel est engagé le nez 115 de plus faible section de l'élément de commande 110. Ainsi le ressort 122 est intercalé entre le plot d'indexation 120 et un décrochement 116 dirigé vers le plot 120 formé entre le nez 115 et le corps de l'élément de commande 110.

Bien entendu une disposition inverse pourrait être prévue ; c'est-à-dire que le plot d'indexation 120 pourrait être placé dans un alésage borgne ménagé à l'extrémité de l'élément de commande 110, le ressort 122 étant alors intercalé entre le fond de l'alésage borgne ménagé dans l'élément de commande 100 et le plot d'indexation 120.

On notera que selon la disposition représentée sur la figure 2 l'alésage ménagé dans le plot 120 et le nez 115 de l'élément de commande 110 ont des sections droites circulaires de révolution et sensiblement complémentaires de sorte que le plot 120 soit libre de pivotement sur l'élément de commande 110 autour de l'axe longitudinal 111 de celui-ci.

Par ailleurs, l'extrémité du plot d'indexation 120 reposant contre le fond 134 de la surface d'indexation 130 est délimitée par un dièdre convexe formé de deux surfaces 124, 126. Ces surfaces 124, 126 sont symétriques par rapport à un plan axial du plot coïncidant avec l'axe longitudinal 111 de l'élément de commande 110. Les surfaces 124, 126 délimitant le dièdre convexe précité se rejoignent au niveau d'une arête 128 qui forme le bord avant du plot d'indexation 120 reposant contre le fond 134 de la surface d'indexation 130. L'arête 128 est perpendiculaire à l'axe longitudinal 111 de l'élément de commande 110, sécante de cet axe longitudinal 111 et contenue dans le plan de symétrie axial précité du plot d'indexation 120.

La disposition d'indexation précitée définit d'une part, une position de repos de l'élément de commande 110 autour de l'axe 114. Elle définit d'autre part, une position de repos du plot d'indexation 120 autour de son axe longitudinal 111.

La position de repos stable de l'élément de commande 110 est obtenue lorsque l'arête 128 du plot d'indexation 120 est alignée et repose contre l'arête 134 de la surface d'indexation 130. La position de repos stable de l'élément de commande 110 est donc obtenue lorsque l'axe longitudinal 111 de l'élément de commande 110 est sécant de l'arête 134 de la surface d'indexation 130.

De même la position de repos stable du plot d'indexation 120 autour de son axe longitudinal est obtenue lorsque l'arête 128 du plot d'indexation est alignée et repose contre l'arête 134 de la surface d'indexation 130.

Selon la présente invention, l'actionneur 140 est formé d'un élément basculant entre deux positions autour d'un axe 141. Selon la représentation schématique de la figure 2, l'axe 141 est sécant de l'axe longitudinal 111 de l'élément de commande 110. L'actionneur basculant 140 est guidé à pivotement autour de l'axe 141 par toute disposition classique, le cas échéant par l'élément de boîtier 131 lui-même. De préférence, l'actionneur basculant 140 est indexé dans son pivotement autour de l'axe 141. Sur sa face 142 dirigée vers l'élément de commande 110, l'actionneur basculant 140 est muni de deux paires de surfaces d'entraînement 143, 146 en forme de dièdres concaves. Le premier dièdre 143 est délimité par deux surfaces 144, 145. Le second dièdre 146 est délimité par deux surfaces 147, 148.

Les deux dièdres concaves 143, 146 sont symétriques par rapport à un plan axial 149 de l'élément basculant 140 passant par l'axe 141. Les surfaces 144, 145, 147 et 148 délimitant les dièdres concaves 143, 146 sont définies par des génératrices rectilignes parallèles à l'axe 141. L'élément basculant 140 est concu pour opérer un effet de commutation électrique lors de son pivotement.

Pour cela l'élément 140 peut par exemple être muni de plots électriquement conducteurs déplacés sur un jeu de lamelles associé.

Selon la disposition particulière représentée sur la figure 2 on a représenté schématiquement un actionneur basculant 140 muni de deux lamelles élastiques 150, 152 sensiblement diamétralement opposées par rapport à l'axe 141.

Les deux lamelles 150, 152 sont réalisées en matériau électriquement conducteur et reliées entre elles. Elles sont munies chacune d'un plot de contact 151, 153 respectivement à leur extrémité. Le plot 151 est déplacé sur une lamelle fixe 154 en forme de couronne plane perpendiculaire à l'axe 141 et centrée sur celui-ci. Le plot 151 reste en contact avec la lamelle 154 au cours du pivotement de l'élément basculant 140.

Le second plot de contact 153 est placé en regard de deux lamelles 155, 156 également planes perpendiculaires à l'axe 141 et formées de secteurs de couronnes centrés sur cet axe 141. Plus précisément, selon la position occupée par l'actionneur basculant 140, le plot 153 vient reposer alternativement contre l'une ou l'autre des deux lamelles 155, 156.

Ainsi, le basculement de l'actionneur 140 entre ces deux positions stables par rotation autour de l'axe 141 permet de relier alternativement la lamelle 154 à la lamelle 155 et à la lamelle 156. On obtient ainsi un effet de commutation électrique.

Selon le dispositif conforme à la présente invention représenté sur la figure 2, les moyens d'entraînement de l'actionneur basculant 140 comprennent un doigt 121 solidaire du plot d'indexation 120. Plus précisément, le doigt 121 s'étend sensiblement parallèlement à l'axe longitudinal 111 de l'élément de commande 110. Il est relié au corps du plot d'indexation 120 par une toile 123 généralement plane et perpendiculaire à l'axe longitudinal 111. L'extrémité libre 125 du doigt 121 éloignée de la toile 123 est dirigée vers les cames d'entraînement 143, 146 de l'actionneur basculant 140. De préférence, le doigt d'entraînement 121 est effilé en direction de son extrémité libre 125 comme représenté sur la figure 2.

Plus précisément encore l'axe longitudinal 127 du doigt d'entraînement 121 est placé dans un plan axial du plot 120 passant par l'axe 111 et qui est orthogonal au premier plan axial précité du plot 120 contenant l'arête 128.

Par ailleurs, la position de l'élément basculant 140 est telle que le doigt d'entraînement 121 soit placé alternativement en regard des cames d'entraînement 143, 146.

Le fonctionnement du dispositif de commutation représenté sur la figure 2 annexée est pour l'essentiel le suivant.

Dans la position stable représentée sur la figure 2, l'arête 128 du plot d'indexation 120 repose contre l'arête 124 de la surface d'indexation 130. Le doigt d'entraînement 121 est placé en regard de la came d'entraînement 143.

Lorsqu'à partir de la position de repos stable représentée sur la figure 2, l'élément de commande 110 est entraîné à pivotement autour de l'axe 114, le doigt d'entraînement 121 est déplacé en rapprochement du fond de la came d'entraînement 143. Ce déplacement du doigt 121 vers le fond de la came d'entraînement 143 est amplifié par le fait que lors du pivotement de l'élément de commande 110 autour de l'axe 114 l'arête 128 du plot d'indexation 120 glisse sur la surface d'indexation 133.

Lorsque l'extrémité 125 du doigt d'entraînement 121 vient contacter la surface de came 145 prévue sur l'élément basculant 140, le plot 120 est entraîné à rotation autour de son axe longitudinal. Lorsque l'extrémité 125 du doigt d'entraînement 121 atteint le fond de la came d'entraînement 143, le doigt d'entraînement 121 provoque le basculement de l'élément 140 vers sa deuxième position stable. L'élément basculant 140 occupe alors une position symétrique de celle représentée sur la figure 2 par rapport à un plan passant par l'axe 111 de l'élément de commande et perpendiculaire à l'arête d'indexation 134. Dans cette position, le pivotement du plot d'indexation 120 autour de son axe longitudinal est maximal.

La lamelle 154 préalablement reliée à la lamelle 155 est maintenant reliée à la lamelle 156. On obtient ainsi un effet de commutation électrique.

Lorsque l'élément de commande 110 est relâché, celui-ci revient en position de repos comme illustré sur la figure 2 grâce au plot d'indexation 120. Celui-ci reprend également sa position de repos stable représenté sur la figure 2 grâce au ressort 122.

Le doigt d'entraînement 121 est alors placé en regard de la seconde came d'entraînement 146. Un nouvel actionnement de l'élément de commande 110 à pivotement autour de l'axe 114 provoque un basculement inverse de l'élément 140 et un retour à l'état de commutation d'origine.

Le dispositif de commutation représenté sur la figure 2 peut par exemple être utilisé pour assurer une commutation simple entre l'état feux de croisement et l'état feux de route des projecteurs d'un véhicule automobile.

L'élément de commande 110 peut bien entendu faire l'objet de nombreux modes de réalisation. Il peut s'agir par exemple d'une manette de commutateur accessible à l'extérieur du boîtier et actionnée directement par l'utilisateur. L'élément de commande 110 peut également être formé d'un élément logé dans le boîtier de commutateur, séparé de la manette actionnée par l'utilisateur mais relié fonctionnellement à celle-ci pour être entraîné à pivotement autour de l'axe 114.

Par ailleurs, l'élément de commande 110 peut faire l'objet d'autres pivotements afin de générer différents effets de commutation électriques.

Par exemple, l'élément de commande 110 peut être déplacé à pivotement autour d'un deuxième axe 117 passant par l'extrémité 125 du doigt d'entraînement 121 et parallèle à l'axe 141 pour assurer un second effet de commutation électrique à l'aide de moyens non représentés sur la figure annexée pour simplifier l'illustration, mais connus en soi.

L'élément de commande 110 peut également être entraîné à rotation autour de son axe longitudinal 111, ou porter ou loger un élément intermédiaire entraîné à rotation autour de cet axe longitudinal 111 pour assurer un troisième effet de commutation électrique à l'aide de moyens de commutation non représentés sur la figure 2 annexée pour simplifier l'illustration, mais connus en soi.

On notera que la présente invention permet une amplification du déplacement du doigt d'entraînement 121 initié par le pivotement de l'élément de commande 110 grâce à l'utilisation de la rampe d'indexation 133. Par ailleurs, le dispositif de commutation conforme à la présente invention comprend un nombre de pièces fort limité.

Bien entendu la présente invention n'est pas limitée au mode de réalisation particulier qui vient d'être décrit mais s'étend à toutes variantes conformes à ses revendications.

## Revendications

1. Commutateur électrique du type connu en soi comprenant un élément de commande (110) guidé à pivotement et indexé dans son pivotement par un plot d'indexation (120) sollicité en appui contre une surface d'indexation (130), par un ressort, un actionneur (140) mobile et adapté pour opérer un effet de commutation électrique lors de son déplacement et des moyens d'entraînement aptes à provoquer un déplacement de l'actionneur (140), lors du pivotement de l'élément de commande (110), afin d'assurer un effet de commutation électrique, caractérisé par le fait que:
- l'actionneur (140) est formé d'un élément basculant entre deux positions, qui comprend deux paires de surfaces d'entraînement (143, 146) en forme de dièdres concaves,
- les moyens d'entraînement comprennent un doigt (121) solidaire du plot d'indexation (120) de l'élément de commande et qui s'étend parallèlement à l'axe longitudinal du plot d'indexation, tel que lors du pivotement de l'élément de commande (110) le doigt (121) vienne successivement en appui contre les paires de surfaces d'entraînement (143, 146) pour déplacer alternativement l'élément basculant (140) entre ses deux positions.

2. Commutateur selon la revendication 1, caractérisé par le fait que l'axe (141) de pivotement de l'élément basculant (140) est sensiblement perpendiculaire et sécant de l'axe longitudinal (111) de l'élément de commande (110).

3. Commutateur électrique selon l'une des revendications 1 ou 2, caractérisé par le fait que les deux parties de surfaces d'entraînement (143, 146) prévues sur l'élément basculant (140) sont symétriques par rapport à un plan axial de l'élément basculant (140).

4. Commutateur électrique selon l'une des revendications 1 à 3, caractérisé par le fait que la surface d'indexation (130) comprend au moins un dièdre concave (132, 133).

5. Commutateur électrique selon la revendication 4, caractérisé par le fait que la surface d'indexation (130) comprend au moins un dièdre concave délimité par deux surfaces (132, 133) qui s'intersectent au niveau d'une arête (134) rectiligne perpendiculaire à l'axe longitudinal (111) de l'élément de commande (110).

6. Commutateur électrique selon l'une des revendications 1 à 5, caractérisé par le fait que le plot (120) est libre de rotation autour de l'axe longitudinal (111) de l'élément de commande (110).

7. Commutateur électrique selon l'une des revendications 1 à 6, caractérisé par le fait que l'extrémité du plot (120) reposant contre la surface d'indexation (130) est délimitée par un dièdre convexe (124, 126).

8. Commutateur électrique selon la revendication 7, caractérisé par le fait que l'arête délimitant l'extrémité du plot d'indexation (120) s'étend perpendiculairement à son axe longitudinal (111).

9. Commutateur électrique selon l'une des revendications 1 à 8, caractérisé par le fait que le plot d'indexation (120) comprend un alésage borgne qui reçoit l'extrémité (115) de l'élément de commande (110).

10. Commutateur électrique selon l'une des revendications 1 à 9, caractérisé par le fait que l'élément de commande (110) est muni d'un alésage borgne logeant le plot d'indexation (120).

11. Commutateur électrique selon l'une des revendications 1 à 10, caractérisé par le fait que l'élément de commande (110) est en outre susceptible de rotation autour de son axe longitudinal (111) pour assurer un second effet de commutation électrique.

12. Commutateur électrique selon l'une des revendications 1 à 11, caractérisé par le fait que l'élément de commande (110) est en outre susceptible de rotation autour d'un troisième axe (117) généralement parallèle à l'axe de pivotement (141) de l'élément basculant (140) pour assurer un troisième effet de commutation électrique.

## Patentansprüche

1. Elektrischer Schalter vom an sich bekannten Typ, der ein Bedienungselement (110), das schwenkbar geführt ist und in seiner Schwenkbewegung durch ein Schaltstück (120) weitergeschaltet wird, das zur Anlage an einer Schaltfläche (130) durch eine Feder vorgespannt ist, einem Betätigungselement (140), das beweglich und so ausgebildet ist, daß es einen elektrischen Schalteffekt bewirken kann, wenn es versetzt wird, und Mitnahmeeinrichtungen, die so ausgebildet sind, daß sie eine Versetzung des Betätigungselementes (140) hervorrufen, wenn das Bedienungselement (110) geschwenkt wird, um einen elektrischen Schalteffekt zu bewirken, dadurch gekennzeichnet, daß
- das Betätigungselement (140) aus einem zwischen zwei Positionen kippbaren Element gebildet ist, das zwei Mitnahmeflächenpaare (143, 146) in Form konkaver Dieder umfaßt,
- die Mitnahmeeinrichtungen einen Finger (121) umfassen, der fest am Schaltstück (120) des Bedienungselementes angebracht ist und parallel zur Längsachse des Schaltstückes verläuft, derart, daß bei einer Schwenkbewegung des Bedienungselementes (110) der Finger (121) nacheinander zur Anlage an den Mitnahmeflächenpaaren (143, 146) kommt, um abwechselnd das kippbare Element (140) zwischen seinen beiden Positionen zu versetzen.

2. Schalter nach Anspruch 1, dadurch gekennzeichnet, daß die Achse (141) der Schwenkbewegung des kippbaren Elementes (140) im wesentlichen senkrecht zur Längsachse (111) des Bedienungselementes (110) verläuft und diese schneidet.

3. Elektrischer Schalter nach einem der Ansprüche 1 oder 2, dadurch gekennzeichnet, daß die beiden Teile der Mitnahmeflächen (143, 146), die am kippbaren Element (140) vorgesehen sind, bezüglich einer Axialebene des kippbaren Elementes (140) symmetrisch sind.

4. Elektrischer Schalter nach einem der Ansprüche 1 bis 3, dadurch gekennzeichnet, daß die Schaltfläche (130) wenigstens einen konkaven Dieder (132, 133) umfaßt.

5. Elektrischer Schalter nach Anspruch 4, dadurch gekennzeichnet, daß die Schaltfläche (130) wenigstens einen konkaven Dieder umfaßt, der von zwei Flächen (132, 133) begrenzt ist, die sich auf der Höhe eines geradlinigen Scheitels (134) senkrecht zur Längsachse (111) des Bedienungselementes (110) schneiden.

6. Elektrischer Schalter nach einem der Ansprüche 1 bis 5, dadurch gekennzeichnet, daß das Stück (120) frei um die Längsachse (111) des Bedienungselementes (110) drehbar ist.

7. Elektrischer Schalter nach einem der Ansprüche 1 bis 6, dadurch gekennzeichnet, daß das Ende des Stückes (120), das an der Schaltfläche (130) anliegt, von einem konvexen Dieder (124, 126) begrenzt ist.

8. Elektrischer Schalter nach Anspruch 7, dadurch gekennzeichnet, daß die Kante, die das Ende des Schaltstückes (120) begrenzt, senkrecht zu seiner Längsachse (111) verläuft.

9. Elektrischer Schalter nach einem der Ansprüche 1 bis 8, dadurch gekennzeichnet, daß das Schaltstück (120) eine Blindbohrung umfaßt, die das Ende (150) des Bedienungselementes (110) aufnimmt.

10. Elektrischer Schalter nach einem der Ansprüche 1 bis 9, dadurch gekennzeichnet, daß das Bedienungselement (110) mit einer Blindbohrung versehen ist, in der das Schaltstück (120) sitzt.

11. Elektrischer Schalter nach einem der Ansprüche 1 bis 10, dadurch gekennzeichnet, daß das Bedienungselement (110) überdies um seine Längsachse (111) gedreht werden kann, um einen zweiten elektrischen Schalteffekt hervorzurufen.

12. Elektrischer Schalter nach einem der Ansprüche 1 bis 11, dadurch gekennzeichnet, daß das Bedienungselement (110) überdies um eine dritte Achse (117) gedreht werden kann, die im wesentlichen parallel zur Schwenkachse (141) des kippbaren Elementes (140) verläuft, um einen dritten elektrischen Schalteffekt hervorzurufen.

## Claims

1. An electrical switch of a type that is known per se, comprising a control element (110) that is pivotally guided and indexed in its pivoting by an indexing stud (120) urged by a spring to bear against an indexing surface (130), a moving actuator (140) adapted to perform an electrical switching effect on being displaced, and drive means suitable for causing the actuator (140) to be displaced during pivoting of the control element (110) so as to perform an electrical switching effect, the switch being characterized by the fact that:
. the actuator (140) is formed by an element that can be rocked between two positions and that has two pairs of drive surfaces (143, 146) forming respective concave notches; and
. the drive means include a finger (121) secured to the indexing stud (120) of the control element and extending parallel to the longitudinal axis of the indexing stud so that during pivoting of the control element (110) the finger (121) comes to bear against the pairs of drive surfaces (143, 146) in succession so as to move the rocking element (140) in alternation between its two positions.

2. A switch according to claim 1, characterized by the fact that the rocking axis (141) of the rocking element (140) is substantially perpendicular to and intersects the longitudinal axis (111) of the control element (110).

3. An electrical switch according to claim 1 or 2, characterized by the fact that the two portions of the drive surfaces (143, 146) provided on the rocking element (140) are symmetrical about an axial plane of the rocking element (140).

4. An electrical switch according to any one of claims 1 to 3, characterized by the fact that the indexing surface (130) comprises at least one concave notch (132, 133).

5. An electrical switch according to claim 4, characterized in that the indexing surface (130) comprises at least one concave dihedron defined by two surfaces (132, 133) that intersect along a straight edge (134) perpendicular to the longitudinal axis (111) of the control element (110).

6. An electrical switch according to any one of claims 1 to 5, characterized by the fact that the stud (120) is free to rotate about the longitudinal axis (111) of the control element (110).

7. An electrical switch according to any one of claims 1 to 6, characterized by the fact that the end of the stud (120) resting against the indexing surface (130) is defined by a convex dihedron.

8. An electrical switch according to claim 7, characterized by the fact that the edge defining the end of the indexing stud (120) extends perpendicularly to its longitudinal axis (111).

9. An electrical switch according to any one of claims 1 to 8, characterized by the fact that the indexing stud (120) includes a blind bore which receives the end (115) of the control element (110).

10. An electrical switch according to any one of claims 1 to 9, characterized by the fact that the control element (110) is provided with a blind bore housing the indexing stud (120).

11. An electrical switch according to any one of claims 1 to 10, characterized by the fact that the control element (110) is also capable of turning about its longitudinal axis (111) in order to provide a second electrical switching effect.

12. An electrical switch according to any one of claims 1 to 11, characterized by the fact that the control element (110) is also capable of turning about a third axis (117) which is generally parallel to the rocking axis (141) of the rocking element (140), to provide a third electrical switching effect.
